# EUROPÄISCHE PATENTANMELDUNG

(11) **EP 1 418 504 A2**
(43) Veröffentlichungstag der Anmeldung: **12.05.2004**
(21) Anmeldenummer: 03021399.5
(22) Anmeldetag: 22.09.2003
(51) Int. Cl.: G06F 13/14

(54) **Zugriffssicherung für serielle Bussysteme**

(30) Priorität: 06.11.2002 DE 10251642
(71) Anmelder: Fujitsu Siemens Computers GmbH, 80807 München (DE)
(72) Erfinder: Nöldge, Detlev, 48366 Laer (DE)
(74) Vertreter: Epping Hermann & Fischer

(57) **Zusammenfassung**

Die Erfindung betrifft einen Computer mit einem seriellen Bussystem, an welches Peripheriegeräte anschließbar sind, bei dem bezüglich des seriellen Bussystems eine Zugriffssicherung ausgebildet ist, in welche Kennungen von Peripheriegeräten registrierbar sind, und beim Anschluß eines Peripheriegerätes an das Bussystem die Kennung des Peripheriegerätes abgefragt wird und in Abhängigkeit der Registrierung der Kennung die Verbindung zum Peripheriegerät freigeschaltet wird oder nicht.

Ebenso betrifft die Erfindung ein Verfahren zur Sicherung von Computern vor unberechtigtem Anschluß von Peripheriegeräten an serielle Bussysteme, bei dem bezüglich des seriellen Bussystems eine Zugriffssicherung in welcher Kennungen von Peripheriegeräten registrierbar sind, beim Anschluß eines Peripheriegerätes an das serielle Bussystem die Kennung des Peripheriegerätes ausliest und in Abhängigkeit der Registrierung der Kennung die Verbindung zum Peripheriegerät frei schaltet oder nicht.

## Beschreibung

Die Erfindung betrifft einen Computer mit einem seriellen Bussystem, an welches Peripheriegeräte anschließbar sind, sowie ein Verfahren zur Sicherung von Computern vor unberechtigtem Anschluß von Peripheriegeräten an serielle Bussyteme.

Computer mit seriellen Bussystemen, insbesondere solche mit hotplugfähigen seriellen Bussystemen, bieten die Möglichkeit an diese seriellen Bussysteme Peripheriegeräte verschiedenster Ausführungsformen anzuschließen. Dies sind zum Beispiel Datenträgerlaufwerke oder digitale Kameras, Tastaturen und ähnliches. Wird ein Peripheriegerät an einen solchen seriellen Anschluß angeschlossen, wird es vom Computer erkannt und unterstützt. Das heißt eine Verbindung zwischen dem Peripheriegerät und dem Computer ist über das serielle Bussystem hergestellt.

Durch die unbegrenzte Anschließbarkeit von Peripheriegeräten an ein solches, zum Beispiel hotplugfähiges, serielles Bussystem, ergibt sich ein Sicherheitsdefizit im Bereich solcher Computer.

Um dieses Sicherheitsdefizit zu kompensieren, sind diese Anschlüsse von seriellen Bussystemen aktivier-, beziehungsweise deaktivierbar. Das heißt der Anschluß ist für einen Anwender nur dann nutzbar wenn zum Beispiel ein Administrator diesen Anschluß, beziehungsweise dieses serielle Bussystem, an diesen Computer aktiviert hat. Im anderen Fall ist für keinen Anwender dieses serielle Bussystem an diesem Computer verfügbar.

Es ist die Aufgabe der Erfindung die Verfügbarkeit von vorhandenen seriellen Bussystemen zu erweitern, und dabei das bestehende Sicherheitsdefizit zu vermindern.

Diese Aufgabe wird gelöst durch einen Computer mit einem seriellen Bussystem, an welches Peripheriegeräte anschließbar sind, bei dem bezüglich des seriellen Bussystems eine Zugriffssicherung ausgebildet ist, in welche Kennungen von Peripheriegeräten registrierbar sind, und beim Anschluß eines Peripheriegerätes an das Bussystem die Kennung des Peripheriegerätes abgefragt wird und in Abhängigkeit der Registrierung der Kennung die Verbindung zum Peripheriegerät freigeschaltet wird oder nicht.

Die Aufgabe wird ebenso gelöst, durch ein Verfahren zur Sicherung von Computern vor unberechtigtem Anschluß von Peripheriegeräten an serielle Bussysteme, bei dem bezüglich des seriellen Bussystems eine Zugriffssicherung in welcher Kennungen von Peripheriegeräten registrierbar sind, beim Anschluß eines Peripheriegerätes an das serielle Bussystem die Kennung des Peripheriegerätes ausliest und in Abhängigkeit der Registrierung der Kennung die Verbindung zum Peripheriegerät frei schaltet oder nicht.

Erfindungsgemäß sind an dem Computer also nur solche Peripheriegeräte anschließbar und betreibbar, die dem Computer bereits bekannt beziehungsweise in dem Computer bereits registriert sind.

Die Erfindung ist in verschiedenen Ausführungsformen weitergebildet, so ist beispielsweise nicht nur ein bestimmtes Gerät einer bestimmten Kennung registrierbar, sondern in einer erweiterten Ausführungsform bestimmte Geräte zu einer Gruppe zusammenfaßbar. Dies können zum Beispiel sein, die Gruppe aller Memorybirds, Digitalkameras, Tastaturen und andere Eingabegeräte und vieles mehr.

In einer weiteren Ausführungsform ist das Freischalten der Verbindung zu einem Peripheriegerät nicht nur alleine durch die Registrierung dessen Kennung, sondern darüber hinaus feingliedriger abstimmbar, indem Berechtigungen in dem Computer für ein bestimmtes Peripheriegerät in Zusammenhang mit einem bestimmten Computernutzer einstellbar sind.

Im folgenden ist die Erfindung anhand von zwei Figuren näher erläutert. Es zeigt
- Figur 1: eine Anordnung aus einem Computer und einem Peripheriegerät.
- Figur 2: einen beispielhaften Verfahrensablauf beim Zugriff auf ein Peripheriegerät.

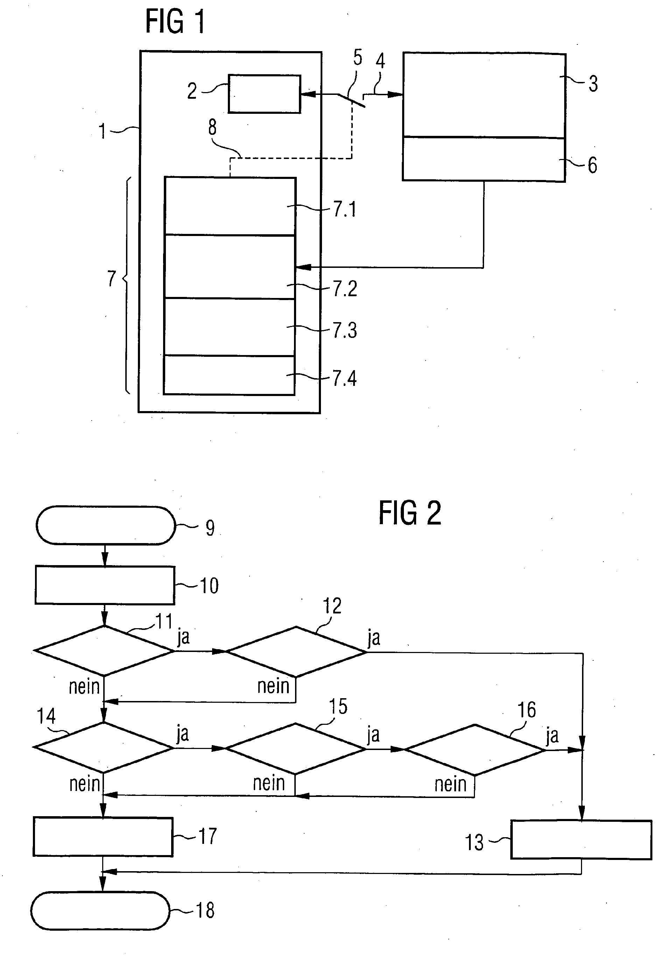

Der in Figur 1 dargestellte Computer 1 weist ein serielles Bussystem 2 auf. Ein Peripheriegerät 3 ist mittels einer Verbindung 4 an den Computer anschließbar. Diese Verbindung 4 weist ein Element 5 auf, das die Verbindung 4 zwischen Peripheriegerät 3 und seriellem Bussystem freigibt. Symbolisch ist das Element 5 durch einen Schließkontakt dargestellt. Das Peripheriegerät 3 weist eine Kennung 6 auf. Diese Kennung ist eindeutig und ermöglicht es, jedes Peripheriegerät zu identifizieren. Ist das Peripheriegerät 3 an dem Computer 1 bereits registriert, so erkennt die in dem Computer angebrachte Zugriffssicherung 7 das Peripheriegerät 3 anhand dieser Registrierung 6 und weist über eine Funktionsstrecke 8 das Element 5 zur Freigabe der Verbindung 4 an.

Ist das Peripheriegerät 3 der Zugriffssicherung 7 nicht bekannt, so findet sich auch keine Registrierung der Kennung 6 in der Zugriffssicherung 7. Bei Anschluß eines solchen Peripheriegerätes weist die Zugriffssicherung 7 das Element 5 über die Funktionsstrecke 8 an, die Verbindung 4 zwischen dem Peripheriegerät 3 und dem seriellen Bussystems 2 des Computers 2 nicht freizugeben.

In einer Weiterbildung der Zugriffssicherung ist die Kennung 6 in der Zugriffssicherung 7 so registriert, daß durch die Kennung 6 Peripheriegerätegruppen erkannt und zusammengefaßt werden und bekannte, beziehungsweise in der Zugriffsicherung 7 registrierte Peripheriegerätegruppen durch die Zugriffsicherung 7 mittels der Funktionsstrecke 8 und des Elements 5 die Verbindung 4 freigegeben wird. Die dargestellte Ausführungsform der Zugriffssicherung 7 weist Orte (7.1 bis 7.4) auf, in denen nicht nur die Kennung 6 ablegbar ist, sondern auch andere für die Freischaltung der Verbindung 4 relevante Parameter ablegbar sind. Dies können zum Beispiel sein:
- ein bestimmter Anwender, der über seinen Nutzernahmen erkannt wird und registriert ist oder
- eine bestimmte Zeit in der der Zugriff über das serielle Bussystem freigeschaltet sein soll,
- bestimmte Gerätegruppen, die wiederum ihrerseits in Klassen zusammengefaßt sind und
- vieles mehr.

Es sind vielerlei Kombinationsmöglichkeiten denkbar aus vielerlei Parametern. Die oben ausgeführte Liste stellt dabei nur einen Ausschnitt aus den zahlreichen Möglichkeiten dar.

Beispielhaft ist in Figur 2 ein erfindungsgemäßer Verfahrensablauf gezeigt, bei dem ein Zugriff 9 auf das serielle Bussystem zuerst die Ermittlung 10 der Kennung 6 auslöst und daraufhin ein Vergleich 11 stattfindet, der zum Beispiel die Berechtigungsparameter 7.1 bis 7.4 für Peripheriegeräte 3 mit dieser Kennung 6 abfrägt und bei positivem Ergebnis einen weiteren Vergleich 12 mit den Berechtigungen des aktuellen Users anstellt, wobei auch hier bei einem positiven Ergebnis der Zugriff 13 auf das Peripheriegerät 3 freigegeben wird. Führt Vergleich 11 oder Vergleich 12 zu einem negativen Ergebnis, ist beispielhaft in diesem Verfahren eine weitere Abfrageebene, die Vergleiche 14, 15 und 16 angeordnet, wobei spezifische Rechte des aktuellen Nutzers in bezug auf die Klasse des angeschlossenen Peripheriegeräts 3 und in Bezug auf die eindeutige Kennung 6 des Peripheriegerätes 3 durchgeführt werden. Führen diese Vergleiche 14, 15 und 16 zu einem positiven Ergebnis so wird der Zugriff 13 auf das Peripheriegerät 3 zugelassen, führt nur einer dieser drei Vergleiche 14, 15 und 16 zu einem negativen Ergebnis wird der Zugriff auf das Peripheriegerät 3 über Zugriff verweigern 17 verweigert.

Die Erfindung eignet sich vorteilhaft für Peripheriegeräte 3 und serielle Bussysteme die auch während des Betriebes des Computers anschließbar sind. Da erfindungsgemäß vor Freigabe der Verbindung 4 zwischen dem seriellen Anschluß 2 und dem Peripheriegerät 3 die Kennung 6 durch die Zugriffssicherung 7 verglichen wird ist es prinzipiell für die Funktion der Zugriffssicherung unerheblich, ob das Peripheriegerät 3 an dem Computer 1 während des Betriebes des Computers 1 oder während des Stillstandes des Computers 1 angeschlossen wird.

### Bezugszeichenliste

- 1: Computer
- 2: Serielles Bussystem
- 3: Peripheriegerät
- 4: Verbindung
- 5: Element zur Freischaltung der Verbindung
- 6: Kennung
- 7: Zugriffssicherung
- 7.1 bis 7.4: Ablageorte für Berechtigungsparameter
- 9: Zugriff
- 10: Ermittlung
- 11, 12: Vergleich ja/nein Entscheidung
- 14, 15, 16: Vergleich ja/nein Entscheidung
- 17: Zugriff verweigern
- 13: Zugriff zulassen
- 18: Ende

## Patentansprüche

1. Computer (1) mit einem seriellen Bussystem (2), an welches Peripheriegeräte (3) anschließbar sind,
**dadurch gekennzeichnet, daß**
bezüglich des seriellen Bussystems (2) eine Zugriffssicherung (7) ausgebildet ist, in welche Kennungen (6) von Peripheriegeräten (3) registrierbar sind, und bei Anschluß eines Peripheriegerätes (3) an das serielle Bussystem (2) die Kennung des Peripheriegerätes (3) abgefragt wird und in Abhängigkeit der Registrierung der Kennung (6) die Verbindung (4) zum Peripheriegerät (3) freigeschaltet wird oder nicht.

2. Computer (1) mit einem seriellen Bussystem (2), nach Patentanspruch 1,
**dadurch gekennzeichnet, daß**
das serielle Bussystem (2) ein USB und/oder ein IEEE1394-System ist.

3. Computer (1) mit einem seriellen Bussystem (2) , nach einem der vorhergehenden Patentansprüche,
**dadurch gekennzeichnet, daß**
im Computer Berechtigungen für Verbindung (4) mit bestimmten Peripheriegeräten (3) einstellbar sind.

4. Computer (1) mit einem seriellen Bussystem (2), nach einem der vorhergehenden Patentansprüche,
**dadurch gekennzeichnet, daß**
die Kennung (6) von in Klassen zusammengefaßten Peripheriegeräte (3) registrierbar ist.

5. Computer (1) mit einem seriellen Bussystem (2), nach einem der vorhandenen Patentansprüche,
**dadurch gekennzeichnet, daß**
die Peripheriegeräte (3) bei ein- und/oder ausgeschaltetem Computer (1) anschließbar sind.

6. Verfahren zur Sicherung von Computern (1) vor unberechtigtem Anschluß von Peripheriegeräten (3) an serielle Bussysteme (2),
**dadurch gekennzeichnet, daß**
bezüglich des seriellen Bussystems (2) eine Zugriffssicherung (7) in welcher Kennungen (6) von Peripheriegeräten (3) registrierbar sind, beim Anschluß eines Peripheriegerätes (3) an das serielle Bussystem (2) die Kennung (6) des Peripheriegerätes (3) ausliest und in Abhängigkeit der Registrierung der Kennung (6) die Verbindung (4) zum Peripheriegerät (3) frei schaltet oder nicht.

7. Verfahren nach Patentanspruch 6,
**dadurch gekennzeichnet, daß**
vor Freischalten der Verbindung (4) zum Peripheriegerät (3) im Computer (1) eingestellte Berechtigungen für die Verbindung (4) abgefragt und die Verbindung (4) in Abhängigkeit der Berechtigungen freigeschaltet wird oder nicht.

8. Verfahren nach Patentanspruch 6 bis 7,
**dadurch gekennzeichnet, daß**
die Peripheriegeräte (3) in Klassen zusammengefaßt sind.

9. Verfahren nach Patentanspruch 6 bis 8,
**dadurch gekennzeichnet, daß**
die Peripheriegeräte (3) bei ein- und bei ausgeschaltetem Computer (1) anschließbar sind.

10. Verfahren nach Patentanspruch 6 bis 9,
**dadurch gekennzeichnet, daß**
vor einem Datenaustausch mit dem Peripheriegerät (3) die Zugriffssicherung (7) die Kennung (6) des Peripheriegerätes (3) abfrägt und/oder die Berechtigungen für die Verbindung (4) mit dem Peripheriegerät (3) abfrägt und in Abhängigkeit von der Kennung (6) und/oder der Berechtigung den Datenaustausch frei schaltet oder nicht.
